# EUROPEAN PATENT APPLICATION

(11) **EP 4 174 711 A1**
(43) Date of publication of application: **03.05.2023**
(21) Application number: 21204952.2
(22) Date of filing: 27.10.2021
(51) Int. Cl.: G06F 30/27, G06F 30/20, G06N 20/00

(54) **SYSTEM AND COMPUTER-IMPLEMENTED METHOD FOR DESIGNING AN ENGINEERING SYSTEM**

(71) Applicant: Siemens Aktiengesellschaft, 80333 München (DE)
(72) Inventor: Frank, Johannes, 81673 München (DE); Mogoreanu, Serghei, 81827 München (DE); Ringsquandl, Martin, 83064 Raubling (DE); Rümmele, Nataliia, 81739 München (DE)
(74) Representative: Siemens Patent Attorneys

(57) **Abstract**

The present invention relates generally to an assistance system and computer-implemented method for designing an engineering system, in particular an automation system.

The computer-implemented method for designing an engineering system comprises the following method steps performed by one or more components, wherein the components are software components which can be executed by one or more hardware and/or firmware components and/or one or more processors, wherein said engineering system is to be designed to meet predefined engineering constraints:
a) receiving, via a connector component (CC), a set of constraints (1) in a machine-readable representation, a domain model (DM) whose elements represent software components and/or hardware components of the engineering system (ES) and their relationships to each other and a set of engineering actions (AC);
b) creating and providing, by an assistant component (AS), at least one formal specification (R) of at least one engineering constraint by using recommendation from the received set of constraints (1), by using concepts related to elements in the domain model and by using a recommended set of constraint specification utilities (UT) preferably based on data types of the used concepts;
c) identifying, by an advisor component, at least one engineering action to be applied if violation of least one engineering constraint is discovered; and
d) displaying the identified, at least one, engineering action on a display component.

## Description

The present invention relates generally to an assistance system and computer-implemented method for designing an engineering system, in particular an automation system. Said engineering system shall be designed to meet engineering constraints.

### BACKGROUND OF THE INVENTION

Advancements in industrial automation have transformed the factory floors and processes in a number of industries, ranging from process industries (e.g., Oil and Gas, Power and Utilities, Water and Wastewater) to hybrid industries (e.g., Food and Beverage, Wind) to discrete industries (e.g., Automotive Manufacturing, Aerospace, Robotics).

A typical industrial plant is a complex system, comprising of a wide range of various interconnected components, such as controllers, IO systems, industrial communication modules, energy distribution systems, etc. Each component possesses a variety of different features required for the operation of the respective system and fulfillment of the required functionalities.

Automating processes in any of these industries requires engineers to design and configure an industrial automation system - in other words to complete an engineering project for an engineering system, consisting of a multitude of individual software- and/or hardware components or modules, the interplay of which fulfills the functional requirements arising from the intended application, e.g. automotive. Selection of necessary components is typically done using configuration software offered by their manufacturer. A known engineering tool as configuration software is TIA portal which is - for example - described in https://new.siemens.com/global/en/products/automation/industr y-software/automation-software/tia-portal/software.html.

A variety of standards, regulations and guidelines have been developed to regulate the industrial domain and to ensure high quality and safety of the developed engineering systems. In engineering projects an engineer must often follow the applicable regulations, customer or branch specific technological standards as well as technological regulations (e.g., Safety, Motion, etc.) in addition to the optional style guidelines. Usually regulations are mandatory to be followed, because their mostly related to legal regulations e.g. safety requirements. Standards are "de facto" mandatory because the customer or provider requires them. An example can be: A standard from the automotive industry describes the implementation of Siemens "SIMATIC STEP 7 Safety" function for S7-1500F programmable logic controller (PLC) with PROFIsafe on PROFINET IO network: 5.3 "In any PROFINET network, there should be only one active PLC among the devices connected in a subnet" a 5.4 "RCVDP block configuration" (there should be an indication which to remove).

A style guideline is usually not mandatory, but highly recommended. For instance, a programming style guideline could be: Define array boundary from 0 to a constant value. Further: Write identifiers of constants in CAPITALS. The technical effect is that the engineer can change the boundaries consistently and CAPITAL letters are easier to find during a debugging or interpretation process of the computer program.

Such regulations, standards and guidelines comprise engineering constraints like "only one active PLC among the devices connected in a subnet". If such a constraint is violated e.g. two active PlCs are connected in a subnet" then a rule can be formulated to overcome the voilation. A rule normally consists of a condition or prerequisite e.g. "only one active PLC among the devices connected in a subnet" or "Write identifiers of constants in CAPITALS" and a conclusion or consequence e.g. "indication which to remove" or "change the lower-case character of the identifier into upper-case characters or CAPITALS.

When the engineer designs and/or develops an engineering system (e.g. for a plant automation which produces cars) they can use a given engineering tool. The engineering tool can be the above-mentioned TIA portal tool. As a potential requirement, the engineer must follow automotive safety standard and preferably the programming style guidelines for the TIA portal tool. The engineer would like assistance in identifying which regulations, standards or guidelines are violated during the development process and how those violations can be fixed. Said rule can result in an engineering action (e.g "remove one of the above-mentioned two PLCs if more than one active PLC is connected to a subnet") which needs to be applied in the design process of the engineering system.

### SUMMARY OF THE INVENTION

It is therefore the object of the present invention to provide a system and/or a method for support in discovering and fixing violation of engineering constraints.

The above-mentioned object is achieved by a method and one or more apparatus or a system, preferably a distributed system, according to the features of the independent claims.

Preferred embodiments of the invention are described in the dependent claims. Any combination of the features of the dependent claims to each other and with the features of the independent claims is possible.

An aspect of the invention is a method for computer-implemented method for designing an engineering system, comprising the following method steps performed by one or more components, wherein the components are software components which can be executed by one or more hardware and/or firmware components and/or one or more processors, preferably with the aim to operate said system and/or to fulfill required functionalities of said system, wherein said engineering system is to be designed to meet predefined engineering constraints:
a) receiving, via a connector component, a set of constraints in a machine-readable representation, a domain model whose elements represent software components and/or hardware components of the engineering system and their relationships to each other and a set of engineering actions whose parameters refer to elements of the domain model;
b) creating and providing, by an assistant component, at least one formal specification of at least one engineering constraint by using recommended constraints from the received set of constraints, by using concepts related to elements in the domain model and by using a recommended set of constraint specification utilities preferably based on data types of the used concepts;
c) identifying, by an advisor component, at least one engineering action to be applied if violation of least one engineering constraint is discovered; and
d) displaying the identified, at least one, engineering action on a display component.
The machine-readable constraints are extracted from a textual representation of the standards, regulations and/or guidelines. Preferably, engineering system configuration data are integrated/incorporated/transformed into the domain model.

Recommendation can be derived from an agent interaction. An agent can be a user or bot (a software application that runs automated tasks without any interaction with a user https://en.wikipedia.org/wiki/Internet_bot.

An example for an engineering action is "removing components or modifying definitions in the domain model".

The inventive method further comprises:
e) designing the engineering system by applying the identified, at least one engineering action; and
f) outputting and/or storing the designed engineering system.
The above-mentioned step e) is performed, if an agent interaction is detected, by a user interface component, indicating that the identified, at least one engineering action is required;

The proposed invention is designed to support engineers at every step of the way from (1) parsing the documents that define the standards to be followed, to (2) formulating the machine-readable versions of the constraints encoded in the standards, to ultimately finding the applicable engineering actions to be triggered for satisfying a given constraint within a given engineering project. The system exploits the domain & engineering actions models to provide meaningful recommendations from the start, while continuing to improve with use.

The technical challenge is that the space of possible configurations and engineering actions grows exponentially with the number of components. Since the constraint satisfaction problem arising from regulations is in the class of NP-complete (nondeterministic polynomial) decision problems. This is because constraint violations can occur in a vast variety of component configurations and the fixes to each of them are not independent, i.e. resolving one violation may break another.

Thus, by providing assistance to the engineer at every step of the design process, the time required for extending the database of constraints to be followed is drastically reduced, as well as for identifying the necessary engineering actions to be applied. In addition, the quality of assistance provided by the proposed invention improves with time due to the training procedure described in the embodiments of the invention described in the following.

According to an embodiment of the invention violation of any of the at least one engineering constraint is discovered, by a validation engine, by matching at least one condition of the at least one engineering constraint against the engineering system to be designed.

The advisor component is preferably based on machine-learning heuristics, wherein the machine-learning heuristics can be adapted by a reward (pos./neg.) representing the quality of the identified, at least one engineering action.

The reward mainly considers severity and/or frequency of the discovered violation according to a predetermined or settable priority of the corresponding engineering constraint. The reward can be determined if the identified, at least one engineering action is indicated to be required.

Furthermore, the reward can be calculated by comparing data from the engineering system after applying the at least one engineering action with retrospective data of the engineering system prior to applying the at least one engineering action.

According to an embodiment of the invention the advisor component iteratively trains a policy network with Graph Neural network, abbreviated as GNN, state encoders with are concatenated and fed through a linear transformation layer and result in at least one engineering action sampled from a softmax or a Gaussian distribution from the concatenated encoders, until no more violation is detected or a maximum number of iterations is reached.

According to an embodiment of the invention, the GNN state encoders comprises as first state space the engineering system at a determined time t, preferably represented as heterogenous graph, and as second state space the at least one formal specification of constraints, preferably represented as SPARQL query algebra tree.

A further aspect of the invention is an assistance system, in particular an assistance system, for designing an engineering system, whereby the assistance system comprises at least one component being at least one software component which can be executed by one or more hardware components and/or one or more processors, wherein said engineering system is to be designed to meet engineering constraints, whereby the assistance system comprises:
a) connector component being configured to receive a set of constraints in a machine-readable representation, a domain model whose elements represent software components and/or hardware components of the engineering system and their relationships to each other and a set of engineering actions whose parameters refer to elements of the domain model;
b) an assistant component being configured to create and provide at least one formal specification of at least one engineering constraint by using a recommendation from the received set of constraints, by using concepts related to elements in the domain model and by using a recommended set of constraint specification utilities preferably based on data types of the used concepts;
c) an advisor component being configured to identify at least one engineering action to be applied if violation of the at least one engineering constraint is discovered; and
d) a display component being configured to display the identified, at least one engineering action.

Embodiments as described above for the method can be analogous applied for the system and for computer program (product) and for the computer-readable storage medium.

This system can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:
Figure 1 illustrates a function ontology;
figure 2 shows a specification of engineering actions following the function ontology;
figure 3 depicts an ontology for devices as hardware components of the engineering system;
figure 4 depicts an ontology for variable components (hardware and software components) of the engineering system;
figure 5 illustrates the interplay between the connector component and the assistant component;
figure 6 shows an example in building at least one formal constraint specification;
figure 7 illustrates the interplay among the assistance system and the engines of the advisor component,
figure 8 depicts a policy-based model for the advisor component.

In this example a user, an engineer, develops an engineering system using an engineering tool, for instance the above-mentioned TIA portal. In the example, the engineer would like to create a system for plant automation which produces cars. As a requirement, the engineer must follow automotive safety standards as well as regulations and preferably the programming style guidelines for TIA portal. The engineer would like assistance in identifying which regulations/standards are violated during the development process and how those violations can be fixed. The engineer is a domain expert and can provide feedback about formalization of the regulations and about recommendations for engineering actions.

As an assistance system, said TIA portal tool can used with the aim to develop engineering systems for factory automation.

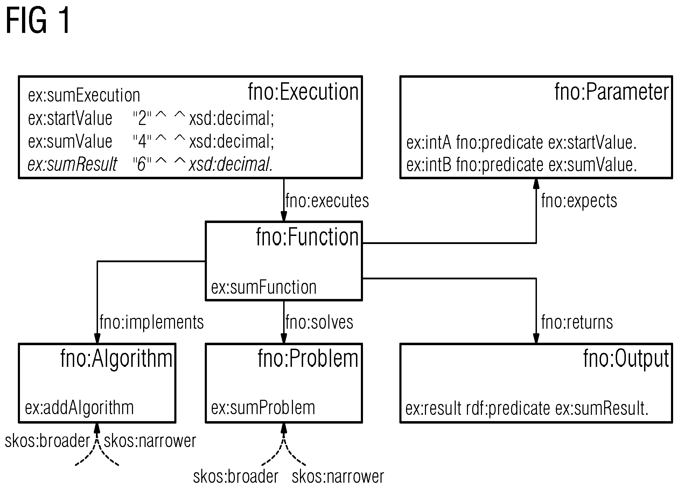

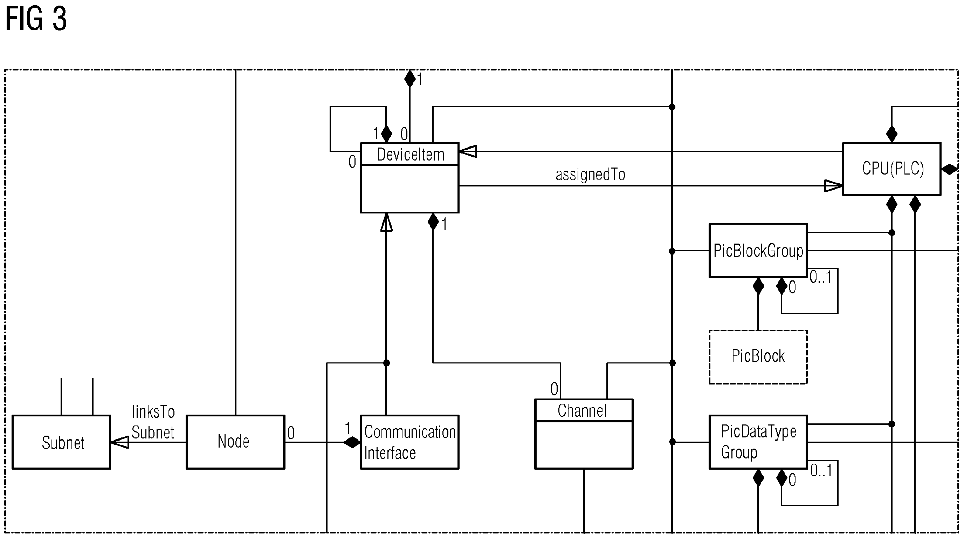

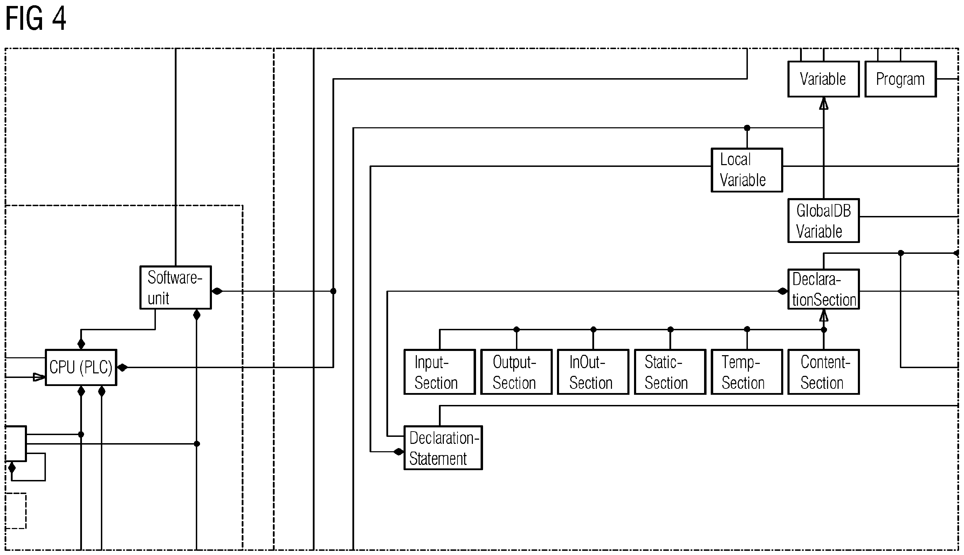

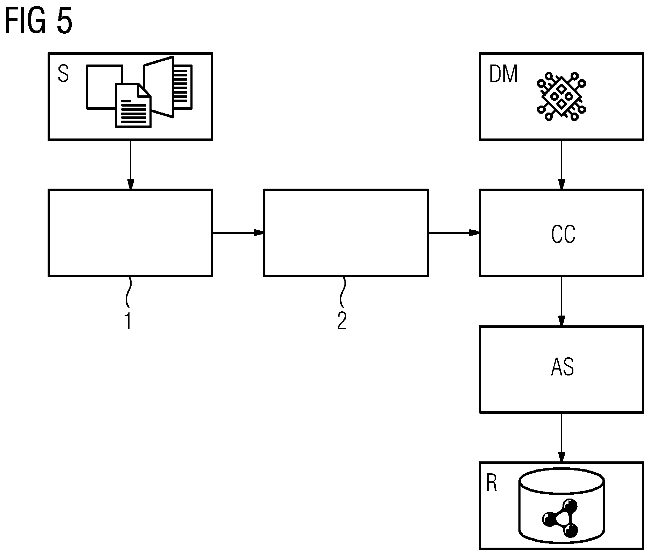

Such an assistance system can comprise the following component: As depicted in figure 5, a Connector component CC provides the environment for the following assistant component AS and later on for the subsequent advisor component.
a. Domain model DM of the engineering system can be received by the connector component CC: A formal model for the engineering system is required. The elements of the model represent as nodes software and hardware components and as edges their relationships to each other. In this example a model as an ontology uses the RDF technology (Resource Description Framework: https://www.w3.org/RDF/.
   Examples are provided in figures 3 (ontology for devices as hardware components of the engineering system) and figure 4 (ontology for variable components (hardware and software components) of the engineering system).
b. Model for engineering action can be received by the connector component CC: A formal model for a set of possible (engineering) actions which can be performed in the assistance system. The set of actions is preferably finite. Each action can have a set of parameters either discreet or continuous. The model of actions as an ontology can also use the RDF technology. Such an ontology can be based on the known function ontology (https://fno.io/ontology/index-en.html). An example is shown in figure 1.

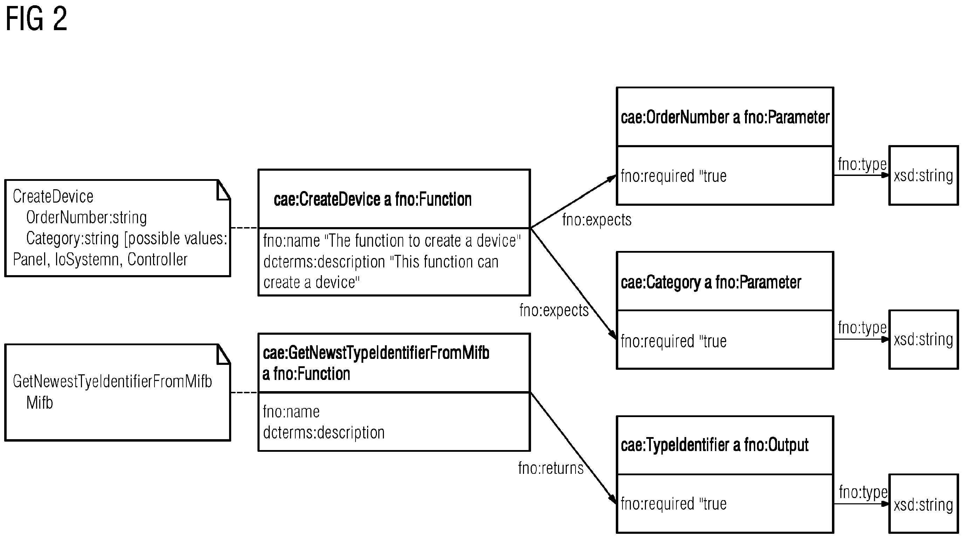

   Figure 2 illustrates how two engineering actions for the TIA portal tool can be modeled using the function ontology. The parameters of the actions refer to the elements of the above described domain model.
c. A kind of Data extraction pipeline 1 is required: to enable the work of the assistant component AS, the textual representation of constraints formulated in PDF or Word documents or Web descriptions of the standards and/or regulations and/or guidelines need to be extracted and transformed into machine readable representation of the constraints. There are specialized NLP methods for constraint extraction, e.g. https://lexpredict-lexnlp.readthedocs.io/en/docs-0.1.6/modules/extract_en_constraints.html.
   Furthermore, there are approaches that work with natural language "skill description" policies which are intuitively understandable by humans and therefore encourage human-agent interaction, e.g. https://arxiv.org/pdf/1712.07294.pdf

An aspect of the invention is to assist the user in developing/designing engineering systems that adhere to the selected standards, regulations and guidelines. Mainly there are the following components:
(1) An assistant component AS for building and/or authoring constraints which result in one or more formal specifications R containing at least one engineering constraint;
(2) a machine learning heuristics-based advisor component for engineering actions to be performed in the assistance system.

The first assistant component helps to construct/create one or more machine-readable formal specification for constraints R from the extracted textual representation 2 (available as e.g. PDF or Word files) of the standards S, regulations and/or guidelines. The one or more specifications for constraints can be presented by ranked list of them.

The constraint specification can be based on the RDF technology and can be provided using one of the following options:
- SPARQL SELECT/CONSTRUCT query syntax (https://www.w3.org/TR/rdf-sparql-query/),
- SHACL (https://www.w3.org/TR/shacl/,
- Triple pattern (graph pattern, https://www.w3.org/2001/sw/DataAccess/rq23/#defn_Trip lePattern,
- form-based (e.g. http://www-kasm.nii.ac.jp/SWFAT/PAPERS/SWFAT13R.PDF) .

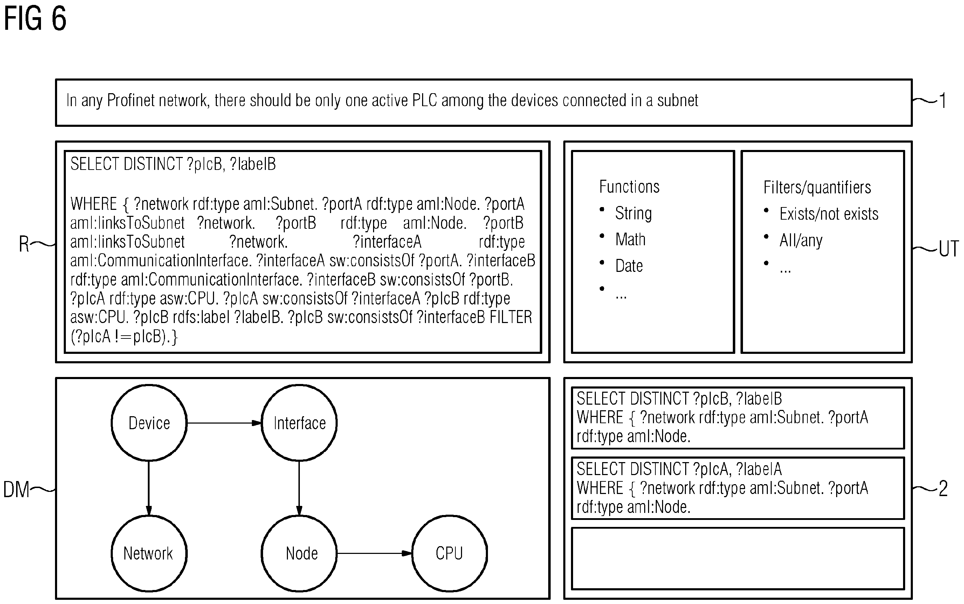

The goal of the assistant component is to create formal specification R given the textual representation e.g. "In any Profinet network, there should be only active PLC among the devices connected in a subnet", depicted in figure 6 under reference 1. The assistant component can be a combination of recommender systems which can be reflected in a user interface component:
a. A first recommender system uses concepts related to elements in the domain model DM: This recommender can be seen as a search engine over the ontology using the keywords from the textual representation.
   The results of this recommender system can be used for recommendation, that means: to highlight (or zoom in) relevant concepts and paths in the domain model DM. An agent can then easily select/click on the highlighted concepts which would be populated into the formal specification R. An agent can be a user or bot (a software application that runs automated tasks without any interaction with a user (e.g. https://en.wikipedia.org/wiki/Internet_bot).
   To resolve cold start problem, this recommender initially formulates the recommendation task as the minimum cost Steiner tree problem (https://en.wikipedia.org/wiki/Steiner_tree_problem). As more examples are collected through the user interface, the recommender is improved by using graph-based techniques.
b.A second recommender system uses utilities UT (e.g. functions, filters, quantifiers): this recommender helps the agent to select a relevant utility functions for constraint specification, e.g. as upper-case function on strings for the above-mentioned guideline.
   This recommender considers both keywords from the textual representation as well as already populated concepts in the formal specification.
   The output of this recommender could be used to order the lists of the utilities or to highlight. To resolve cold start problem, this recommender can narrow down the utilities based on the provided data types of the concepts. As more examples are collected through the user interface component, this recommender is improved by using graph-based techniques.
c. A third recommender system uses the received set of constraints. This recommender builds a list of possible potential constraint specifications 2 extracted from the textual representation, domain model DM and results of a. and b.. As more examples are collected through the user interface component, the recommender is improved by using graph-based techniques.

Finally, the assistant component provides one or more formal specifications of one or more engineering constraints.

The second advisor component helps engineers to follow the standards by suggesting identified engineering actions to fix the uncovered violations. The advisor component considers the complex inter-dependencies between the rules within a given standard, as well as the interplay and hierarchy of a collection of standards and/or guidelines and/or regulations. To enable the work of the advisor component, data from the assistance system AS are extracted. This data are transformed according to domain model DM. Since an ontology as domain model DM is used, the target format for the extracted data is a graph (or knowledge graph). This data integration ensures that data from the assistance system are introduced into the knowledge graph. Then advisor component can execute engineering actions in the assistance system. Finally, the engineering system can be designed by applying the engineering actions by a design component, preferably included in the advisor component. An output component included in or connected with advisor component can store and/or output the designed engineering system.

The Advisor component produces a set or a list of engineering actions which should potentially fix uncovered violations. In the example: if the constraint means "In any Profinet network, there should be only active PLC among the devices connected to the subset." If there are two PLCs A and B are detected/discovered, then a list of engineering actions can be on shown on a display component for recommendation and/or for user interaction (e.g. selecting one or more of engineering actions of the presented list of engineering actions.

A list of engineering actions can be:
I. remove PLC A from the subset,
II. remove PLC B from the subset.

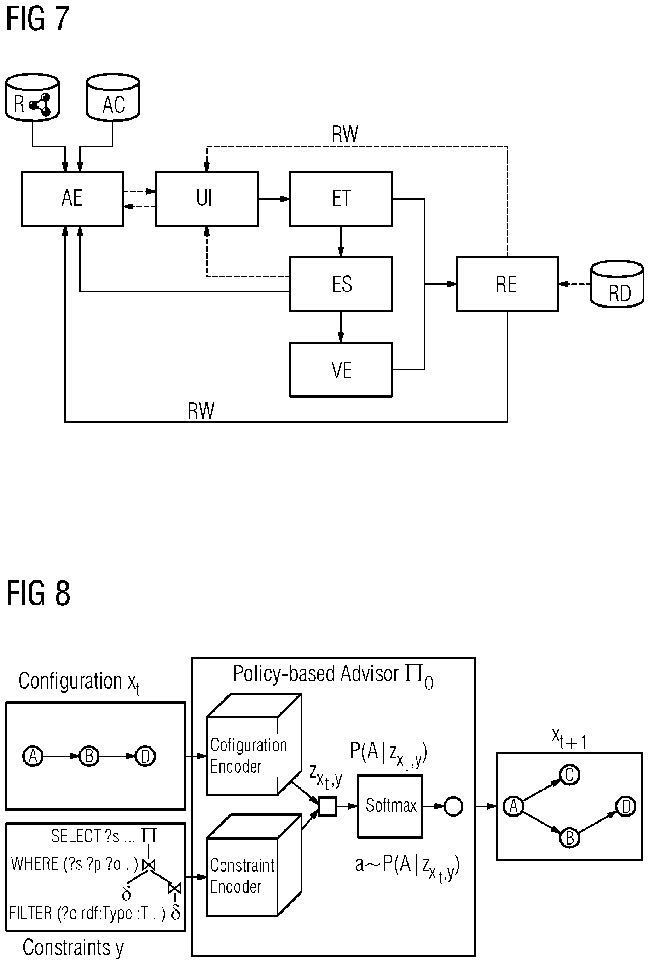

As shown in Figure 7, the advisor component comprises three engines. An engine can be a hardware and/or software component. A validation engine VE, a reward engine RE and an advisor engine AE. The validation engine is able to discover violations. The advisor component uses reinforcement learning techniques to ensure continuous learning and to increase personalization capability. The advisor component comprises a reward engine RE which gives positive and/or negative rewards as an incentive or punishment directly or indirectly through agent confirmation via user interface component to the advisor engine AE.
a. The validation engine matches the constraint specifications R against the currently developed system. As input, validation engine takes the current state of the system, which comes from the above-mentioned data integration from the assistant component AS and the set of constraint specifications R (as constructed as afore mentioned). As output, the validation engine VE produces a report of violated constraints.
   There can be potentially a high number of complex constraint specifications. Considering that the pattern matching queries on graphs are NP (nondeterministic polynomial), if all constraints need to be considered at every time. It is therefore useful to introduce optimization techniques into the validation engine which limit the number of constraints matched at any given time. For this purpose, constraints using the domain model are filtered by considering only those constrains which encompass related concepts whereby related concepts means that they are connected to elements in the domain model.
   In case a SPARQL SELECT query, syntax is used to formalize constrain specifications, the validation engine is implemented as a SPARQL query engine on top of a graph database used to store the integrated states of the engineering system.
b. A reward engine RE produces a real number as a reward RW which quantifies the quality of engineering actions suggested by the advisor engine AE.
   The reward engine has two possible settings:
   i. During the training phase, the reward engine calculates the reward based on the reports of the validation engine (i.e. the more constrains are violated, the lower the reward is) and of the assistance system ET (i.e., actions which fail or lead to warnings), and how similar the new state of the engineering system ES (after applying one or more suggested engineering actions) is to the retrospective data (prior to applying one or more suggested engineering actions), stored in a Database RD. Since there might be alternative ways to achieve any given state of the engineering system, the reward engine does not compare the engineering actions but rather checks the similarity of engineering systems. Since engineering systems are formalized as graphs, we employ graph similarity approaches (e.g. based on node similarity approach described in WO 2020/239209 A1).
   ii. During the real-time phase, the reward engine calculates the reward based on the reports of the assistance system ET and of the validation engine VE, and how similar the suggested engineering action is to the final engineering action accepted/confirmed by the agent via user interface component UI.
   In both phases the reward engine also weighs the violations according to the priority of the corresponding constraints.
c. The Advisor engine uses reinforcement learning trains a policy network with Graph Neural Network (GNN) state encoders, one for the engineering system configuration and one for the engineering constraints which can be represented as SPARQL Query Algebra tree. The encoded states are concatenated and fed through a linear transformation layer and finally the actions are sampled from either a softmax or a Gaussian distribution of this last encoding.

In Figure 8 shows a policy-based model for the advisor engine.
a. The advisor engine is iteratively trained with a policy π_θ by interacting with the assistance system across multiple episodes.
b. The state space of the advisor engine is the engineering system at time t, represented as a heterogeneous graph xₜ (in the figure with nodes A, B, C), and the complete set of constraints y, preferably represented as SPARQL query algebra trees.
c. The (engineering) action space A of the advisor engine is given by the assistance system's function ontology AC (see figure 7), which can be described as shown in figure 2. In figure 8, only discrete action spaces are considered. It can be extended to continuous actions as well.
d. An episode can start with any given engineering system configuration in the assistance system, e.g. the empty project or an already partially engineered solution, and consists of iterative steps until no more constraints are violated or the maximum number of steps is reached. The result xₜ₊₁ is new engineering system configuration after applying one or more identified actions. An identified action by the advisor engine can be confirmed by an agent interaction via the user interface component UI.
e. The final reward given to the advisor engine is binary, i.e. 1 if no more constraints are violated and 0 otherwise.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the system and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for designing an engineering system, comprising the following method steps performed by one or more components, wherein the components are software components which can be executed by one or more hardware and/or firmware components and/or one or more processors, wherein said engineering system is to be designed to meet predefined engineering constraints:
a) receiving, via a connector component (CC), a set of constraints (1) in a machine-readable representation, a domain model (DM) whose elements represent software components and/or hardware components of the engineering system (ES) and their relationships to each other and a set of engineering actions (AC);
b) creating and providing, by an assistant component (AS), at least one formal specification (R) of at least one engineering constraint by using recommendation from the received set of constraints (1), by using concepts related to elements in the domain model and by using a recommended set of constraint specification utilities (UT) preferably based on data types of the used concepts;
c) identifying, by an advisor component, at least one engineering action to be applied if violation of least one engineering constraint is discovered; and
d) displaying the identified, at least one, engineering action on a display component.

2. Method according to claim 1, wherein the method further comprises:
a) designing the engineering system by applying the identified, at least one engineering action; and
b) outputting and/or storing the designed engineering system.

3. Method according to claim 2, wherein, the method further comprises:
- step a) of claim 2 is performed, if an agent interaction is detected, by a user interface component (UI), indicating that the identified, at least one engineering action is required;

4. Method according to any of the preceding claims, wherein violation of any of the at least one engineering constraint is discovered, by a validation engine, by matching at least one condition of the at least one engineering constraint against the engineering system to be designed.

5. Method according to any of the preceding claims, wherein the advisor component is based on machine-learning heuristics.

6. Method according to the preceding claim, wherein the machine-learning heuristics is adapted by a reward (RW) representing the quality of the identified, at least one engineering action.

7. Method according to any of the preceding claims, wherein the reward considers severity and/or frequency of the discovered violation according to a predetermined or settable priority of the corresponding engineering constraint.

8. Method according to claim 2 or 3 and claim 6 or 7, wherein the reward is determined if the identified, at least one engineering action is indicated to be required.

9. Method according to claim 2 or 3 and 7 or 8, wherein the reward is calculated by comparing data from the engineering system after applying the at least one engineering action with retrospective data (RD) of the engineering system prior to applying the at least one engineering action.

10. Method according to any of the preceding claims, wherein the advisor component iteratively trains a policy network with Graph Neural network, abbreviated as GNN, state encoders with are concatenated and fed through a linear transformation layer and result in at least one engineering action sampled from a softmax or a Gaussian distribution from the concatenated encoders, until no more violation is detected or a maximum number of iterations is reached.

11. Method according to preceding claim, wherein the GNN state encoders comprises as first state space the engineering system at a determined time t, preferably represented as heterogeneous graph, and as second state space the at least one formal specification of constraints, preferably represented as SPARQL query algebra tree.

12. An assistance system (ET) for designing an engineering system, whereby the assistance system comprises at least one component being at least one software component which can be executed by one or more hardware components and/or one or more processors, wherein said engineering system is to be designed to meet engineering constraints, whereby the assistance system comprises:
a) connector component (CC) being configured to receive a set of constraints (1) in a machine-readable representation, a domain model whose elements represent software components and/or hardware components of the engineering system and their relationships to each other and a set of engineering actions whose parameters refer to elements of the domain model;
b) an assistant component (AS) being configured to create and provide at least one formal specification of at least one engineering constraint by using a recommendation from the received set of constraints, by using concepts related to elements in the domain model and by using a recommended set of constraint specification utilities preferably based on data types of the used concepts;
c) an advisor component being configured to identify at least one engineering action to be applied if violation of the at least one engineering constraint is discovered; and
d) a display component being configured to display the identified, at least one engineering action.

13. Assistance system (ET) according to claim 12, wherein the system further comprises:
a) a design component being configured to design the engineering system by applying the identified, at least one engineering action; and
b) an output component being configured to output and/or store the designed engineering system.

14. Assistance system according to claim 13, wherein, the system further comprises:
- a user interface (UI) component being configured to detect an agent interaction indicating that the identified, at least one engineering action is required;
- the design component is additionally configured to perform, applying the identified, at least one engineering action, if an agent interaction is detected, by a user interface component, indicating that the identified, at least one engineering action is required.

15. Assistance system according to any of the preceding claims 12 to 14, wherein the advisor component is based on machine-learning heuristics.

16. Computer program which is being executed by one or more processors of a computer or of the system according to claim 12 to 14 in order to perform a method according to any of the preceding method claims.

17. Computer-readable storage media with a computer program according to previous claim.
